# EUROPEAN PATENT SPECIFICATION

(11) **EP 1 976 186 B1**
(45) Date of publication and mention of the grant of the patent: **16.07.2014**
(21) Application number: 07702124.4
(22) Date of filing: 18.01.2007
(51) Int. Cl.: H04L 29/06, H04M 3/22

(54) **A METHOD FOR REALIZING THE LEGAL LISTENING IN THE NEXT GENERATION NETWORK AND A SYSTEM THEREOF**
VERFAHREN ZUM REALISIEREN DES LEGALEN ZUHÖRENS IM NETZWERK DER NÄCHSTEN GENERATION UND SYSTEM DAFÜR
PROCÉDÉ D'ÉCOUTE LÉGALE DANS UN RÉSEAU DE NOUVELLE GÉNÉRATION ET SYSTÈME ASSOCIÉ

(30) Priority: 18.01.2006 CN 200610001517
(43) Date of publication of application: 01.10.2008
(73) Proprietor: Huawei Technologies Co., Ltd., Longgang District, Shenzhen Guangdong 518129 (CN)
(72) Inventor: ZHENG, Bo, Shenzhen Guangdong 518129 (CN)
(74) Representative: Kreuz, Georg Maria
(86) International application number: PCT/CN2007/000192
(87) International publication number: WO 2007/082477

(56) References cited:
- EP-A1- 1 528 774
- WO-A1-02/093838
- CN-A- 1 509 015
- CN-A- 1 684 425
- CN-A- 1 691 601
- ALBRECHT SCHWARZ ALCATEL GERMANY ET AL: ITU-T DRAFT STUDY PERIOD 2005-2008, INTERNATIONAL TELECOMMUNICATION UNION, GENEVA ; CH, vol. STUDY GROUP 16, 26 July 2005 (2005-07-26), pages 1-5, XP017407990
- "Universal Mobile Telecommunications System (UMTS); 3G security; Lawful interception architecture and functions (3GPP TS 33.107 version 6.6.0 Release 6); ETSI TS 133 107" ETSI STANDARDS, LIS, SOPHIA ANTIPOLIS CEDEX, FRANCE, vol. 3-SA3, no. V6.6.0, 1 December 2005 (2005-12-01), XP014032864 ISSN: 0000-0001
- "Telecoms & Internet converged Services & Protocols for Advanced Networks (TISPAN); NGN Lawful Interception; Lawful Interception functional entities, information flow and reference points; Draft ETSI TS 187 005" ETSI STANDARDS, LIS, SOPHIA ANTIPOLIS CEDEX, FRANCE, vol. TISPAN, no. V0.0.12, 1 August 2006 (2006-08-01), XP014034640 ISSN: 0000-0001

## Description

### Cross-reference to related application

This application is a continuation of International Application No. PCT/CN2007/000192,filed on Jan. 18, 2007,which claims the priority of CN application No. 200610001517.8 filed on Jan. 18, 2006,titled "method and system for lawful interception in next generation networks"

### FIELD OF THE INVENTION

The present invention relates to an interception technology, in particular, to a method and system for lawful interception for subscribers that access Next Generation Networks (NGNs) from fixed networks.

### BACKGROUND

Lawful interception refers to a law enforcement action taken by a Law Enforcement Agency (LEA) approved by an authorization organ to monitor communication services of a public communication network in compliance with relevant national laws and industrial specifications for public communication networks. A method for lawful interception is implemented as follows: An Administration Function (ADMF) entity of the LEA sends interception data via an X1_1 data interface to an interception control network element in a communication network; the interception control network element receives the interception data and then monitors a subscriber or multiple subscribers according to the interception data it receives. When detecting an activity of a monitored subscriber, the interception control network element sends Interception-Related Information (IRI) on the monitored subscriber via an X2 interface to a Delivery Function 2 (DF2) entity and also sends the media flows corresponding to the monitored subscriber via an X3 interface to a monitoring center, for example a Delivery Function 3 (DF3) entity.

A Next Generation Network (NGN) is an integrated network based on Packet Switching (PS). It provides all services of fixed networks and possesses the service capability of mobile networks. For the NGNs researched by the current standardization organizations, Core Networks (CNs) are a focus of the research. In an NGN, a CN is an IP Multimedia Subsystem (IMS) network that can provide services for both subscribers accessing the NGN from fixed networks and subscribers accessing the NGN from mobile networks.

According to the standards currently defined by the 3rd Generation Partnership Project (3GPP), in the lawful interception service for subscribers in an NGN, 3rd-Generation GPRS Support Nodes (3G GSNs) monitor the subscribers in the NGN. There are two types of 3G GSNs: GPRS Gateway Support Node (GGSN) and Serving GPRS Support Node (SGSN). Upon receipt of a media flow of a monitored subscriber, a 3G GSN sends the media flow to a DF3 entity of the LEA. The 3G GSNs in an IMS network, however, include GGSNs and SGSNs, and are involved when subscribers access the NGN from mobile networks. In other words, when a subscriber accesses the NGN from a mobile network, the media flows of the subscriber pass a 3G GSN, so that the 3G GSN duplicates the media flows of the subscriber it receives and sends a duplicate of the media flows to a monitoring center to monitor the subscriber. Nevertheless, the 3G GSNs in an IMS network are not involved when subscribers access the NGN from fixed networks. In other words, when a subscriber accesses the NGN from a fixed network, the media flows of the subscriber do not pass any 3G GSN. For this reason, the 3G GSNs cannot send the media flows of a subscriber accessing the NGN from a fixed network to a monitoring center. At present, no other means are provided to collect the media flows of a subscriber in a lawful interception scenario when the subscriber accesses the NGN from a fixed network.

Obviously, in today's NGNs, no means is available to monitor the subscribers that access NGNs from fixed networks. This greatly restricts the application scope of the lawful interception service and lowers the Quality of Service (QoS) of NGNs.

EP 1528774 A1 concerns a method for providing lawful interception within a communication network as well as an interception gateway and a media gateway controller. Media gateways transmit RTP/IP packets comprising the content of an intercepted communication to the interception gateway adapted to receive such content of communication from at least two media gateways. The media gateway controller transmits corresponding interception related information of said communication to the interception gateway. The interception gateway transmits said interception related information and said corresponding communication content together to a corresponding monitoring facility.

### SUMMARY

The present invention provides a method and system for lawful interception in NGNs so as to provide lawful interception for subscribers accessing NGNs from fixed networks.

To attain the above object, the present invention provides a method for lawful interception for subscribers accessing NGNs from fixed networks, wherein a Border Gateway Function (BGF) entity of the next generation networks is connected with a Delivery Function 3 (DF3) entity of a Law Enforcement Agency (LEA)and the method comprising:
A, receiving, by the Border Gateway Function entity monitored object information sent from an interception information provision entity, wherein the interception information provision entity is an Administration Function entity of the Law Enforcement Agency, the step A further comprises:
   A21, sending, by the Administration Function entity of the Law Enforcement Agency, the interception data carrying monitored subscriber identifiers to an existing interception control network element, and the interception control network element storing the received interception data carrying monitored subscriber identifiers;
   A22, determining, by the interception control network element, whether a subscriber is a monitored subscriber according to the stored interception data carrying monitored subscriber identifiers and an identifier of the subscriber in a session setup process, if the subscriber is a monitored subscriber, performing step A23;
   A23, sending, by the interception control network element, an identifier of the Border Gateway Function entity to the Administration Function entity of the Law Enforcement Agency, wherein media flows corresponding to the monitored subscriber passes through the Border Gateway Function entity;
   A24, receiving, by the Border Gateway Function entity the monitored object information sent from the Administration Function entity of the Law Enforcement Agency, wherein the Administration Function entity of the Law Enforcement Agency sends the monitored object information to the Border Gateway Function entity according to the received identifier of the Border Gateway Function entity;
   B, sending by the Border Gateway Function entity, media flows corresponding to the monitored subscriber(s) to the Delivery Function 3 entity according to the received monitored object information.

To attain the above object, the present invention further provides a system for lawful interception for subscribers accessing NGNs from fixed networks, comprising:
a Delivery Function 3 entity adapted to receive media flows corresponding to monitored subscribers and analyze the received media flows so as to monitor subscribers;
wherein the system further comprises: an interception information provision entity, an interception control network element, and a Border Gateway Function entity; wherein
the interception information provision entity is an Administration Function entity of a Law Enforcement Agency
an existing interception control network element, adapted to receive the interception data carrying monitored subscriber identifiers sent from the Administration Function of the Law Enforcement Agency, obtain an identifier of the Border Gateway Function entity passed through by the media flows corresponding to monitored subscribers, and send the obtained identifier of the Border Gateway Function entity to the Administration Function entity of the Law Enforcement Agency;
the Administration Function entity of the Law Enforcement Agency is adapted to send the interception object information to the Border Gateway Function entity; and

the BGF entity is adapted to receive the monitored object information and sends the media flows corresponding to the subscriber(s) to a DF3 entity according to the monitored object information.

Obviously, according to the present invention, a BGF entity can trigger the duplication of media flows of monitored subscribers according to the interception data or media flow description information of the monitored subscribers when the monitored subscribers access the NGN from fixed networks, and can send a duplicate of the media flows to a DF3 entity. In this way, lawful interception is provided for subscribers accessing the NGN from fixed networks. Therefore, the application scope of the lawful interception service is greatly expanded and the QoS of the NGN is improved.

### BRIEF DESCRIPTION OF THE DRAWING(S)

Figure 1 shows a basic structure of the system for lawful interception in NGNs according to the present invention;
Figure 2A1 shows a basic structure of the system for lawful interception in NGNs according to the present invention, where only an Administration Function (ADMF) entity serves as the interception information provision entity;

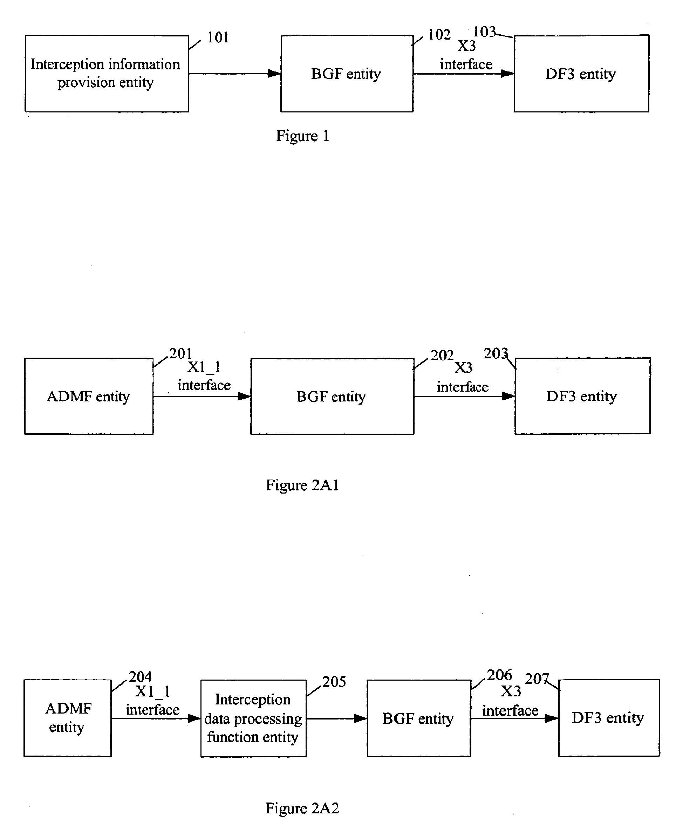

Figure 2A2 shows an optimized structure of the system for lawful interception in NGNs according to the present invention, where only an ADMF entity serves as the interception information provision entity;

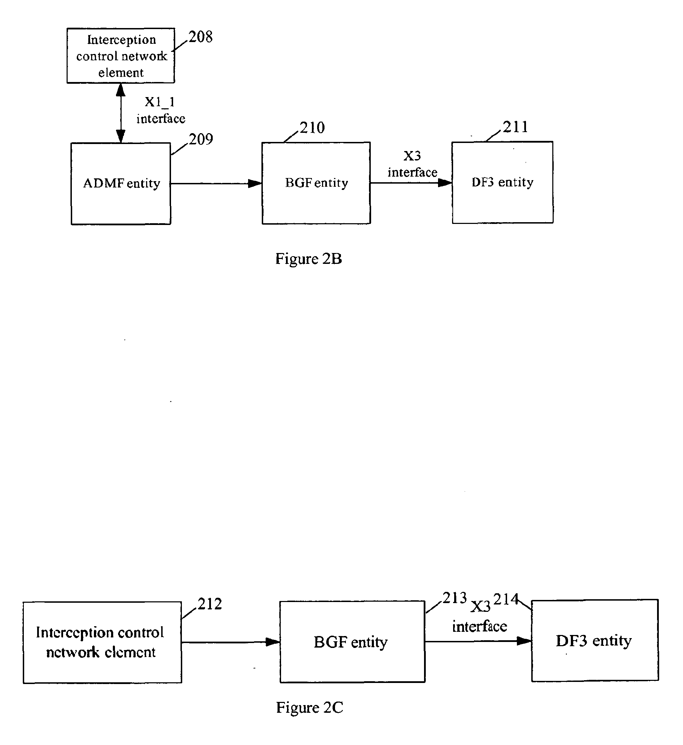

Figure 2B shows a basic structure of the system for lawful interception in NGNs according to the present invention, where an ADMF entity and a Proxy Call Session Control Function (P-CSCF) entity together serve as the interception information provision entity;
Figure 2C shows a basic structure of the system for lawful interception in NGNs according to the present invention, where an interception control network element in the NGN serves as the interception information provision entity;

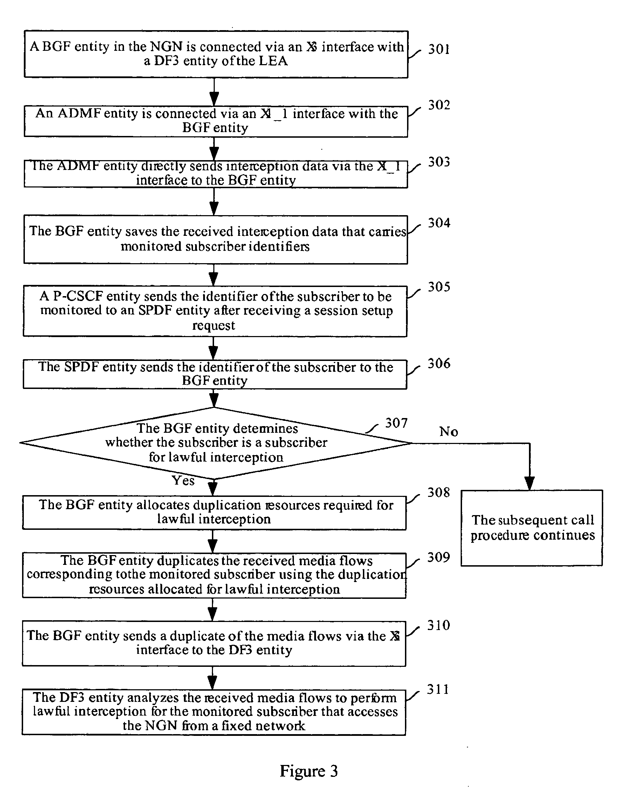

Figure 3 shows a flowchart of the method for lawful interception in NGNs according to Embodiment 1 of the present invention;

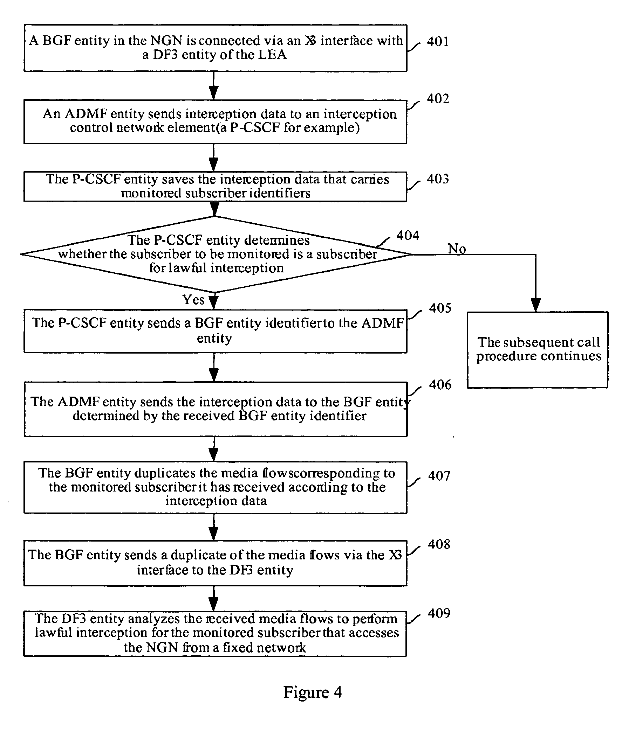

Figure 4 shows a flowchart of the method for lawful interception in NGNs according to Embodiment 2 of the present invention;

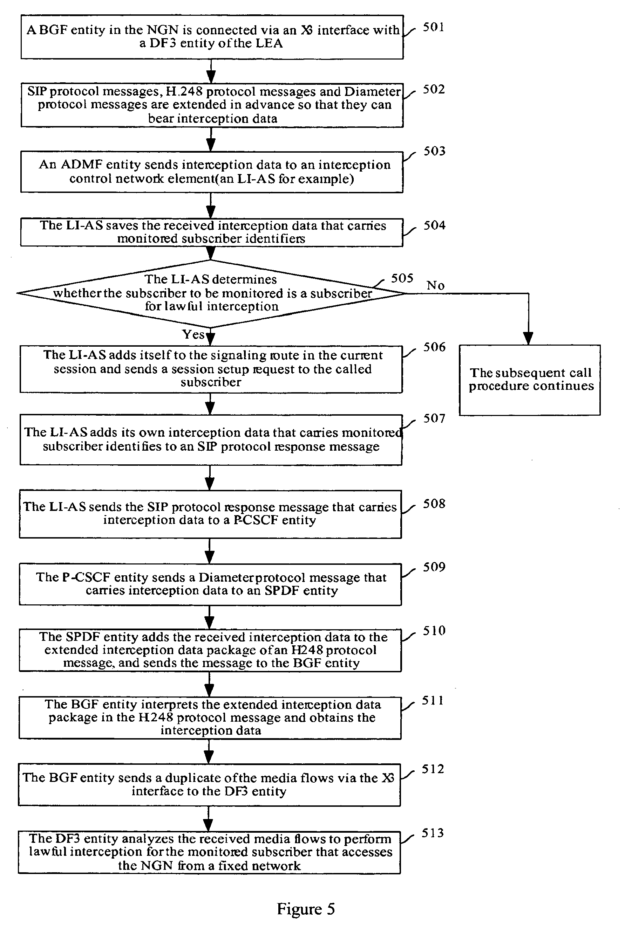

Figure 5 shows a flowchart of the method for lawful interception in NGNs according to Embodiment 3 of the present invention; and

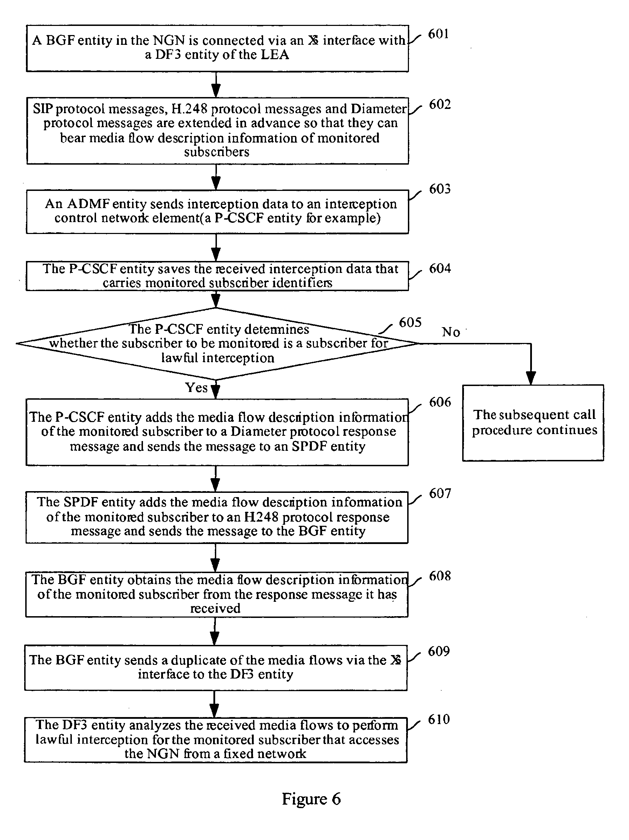

Figure 6 shows a flowchart of the method for lawful interception in NGNs according to Embodiment 4 of the present invention.

### DETAILED DESCRIPTION

Currently, the Telecommunications and Internet Converged Services and Protocols for Advanced Networking (TISPAN) organization subordinate to the European Telecommunications Standards Institute (ETSI) has defined a Resource and Admission Control Subsystem (RACS) for NGNs. The RACS includes Service Policy Decision Function (SPDF) entities, Border Gateway Function (BGF) entities, and other network elements (NEs). An SPDF entity is connected with an Administration Function (AF) entity in an IP Multimedia Subsystem (IMS) network. An AF entity is a Proxy Call Session Control Function (P-CSCF) entity. A BGF entity is connected with an SPDF entity. Moreover, a BGF entity is a packet-to-packet gateway located on a path for transmitting media flows of subscribers accessing the NGN from fixed networks. As can be seen, when a subscriber accesses the NGN from a fixed network, a BGF entity can obtain media flows of the subscriber. Therefore, BGF entities can be utilized to perform lawful interception for subscribers accessing the NGN from fixed networks. Accordingly, the present invention provides a method for lawful interception in NGNs, including the following steps:
A BGF entity is connected with a Delivery Function 3 (DF3) entity;
An interception information provision entity sends monitored object information to the BGF entity;
The BGF entity receives the monitored object information and sends media flows of the subscriber(s) according to the monitored object information to the DF3 entity.

According to the present invention, the interception information provision entity may be an ADMF entity of the LEA and then the ADMF entity may send monitored object information to a BGF entity in the following way:
A BGF entity serves as an interception control network element, that is, an ADMF entity is connected via an X1_1 interface with the BGF entity, so that the ADMF entity directly sends the interception data that carries monitored subscriber identifiers as monitored object information to the BGF entity when a subscriber needs to be monitored;
Alternatively, when a subscriber needs to be monitored, an ADMF entity may send interception data to an interception control network element; the interception control network element sends a BGF entity identifier to the ADMF entity; the ADMF entity sends the interception data that carries monitored subscriber identifiers or sends the media flow description information of monitored subscribers as monitored object information to the BGF entity determined by the received BGF entity identifier.

According to the present invention, when the interception information provision entity is an ADMF entity and the interception control network element is a BGF entity, an interception data processing function entity may be preset in the NGN, so that the ADMF entity receives the interception data forwarded by the interception data processing function entity and then sends the interception data to the BGF entity.

According to the present invention, the interception information provision entity may also be an interception control network element in the NGN and then the interception control network element may send monitored object information to a BGF entity in the following way:
After receiving the interception data that carries monitored subscriber identifiers from an ADMF entity, an interception control network element in the NGN sends the interception data that carries monitored subscriber identifiers or sends the media flow description information of monitored subscribers as monitored object information to the BGF entity.

Figure 1 shows a basic structure of the system for lawful interception in NGNs according to the present invention. As shown in Figure 1, the present invention further provides a system for lawful interception in NGNs, including an interception information provision entity 101, adapted to send monitored object information to a BGF entity; a BGF entity 102, adapted to receive the monitored object information and send the media flows corresponding to the monitored subscriber(s) to a DF3 entity according to the monitored object information; and a DF3 entity 103, adapted to receive the media flows corresponding to the monitored subscriber(s) and analyze the received media flows for monitoring purposes.

Figure 2A1 shows a basic structure of the system for lawful interception in NGNs according to the present invention, where an Administration Function (ADMF) entity 201 serves as the interception information provision entity and a BGF entity 202 serves as the interception control network element. As shown in Figure 2A1, in the system for lawful interception according to the present invention, the interception information provision entity may be an ADMF entity 201, which may be directly connected via an X1_1 interface with a BGF entity 202serving as the interception control network element.

Figure 2A2 shows an optimized structure of the system for lawful interception in NGNs according to the present invention, where an Administration Function (ADMF) entity 204 serves as the interception information provision entity and a BGF entity 206 serves as the interception control network element. In a preferred embodiment of the present invention, the system may further include an interception data processing function entity 205 to avoid the case that the ADMF entity of the LEA exchanges messages with plenty of BGF entities. The ADMF entity sends interception data to the interception data processing function entity. Upon receipt of the interception data, the interception data processing function entity forwards the interception data to a BGF entity.

Figure 2B shows a basic structure of the system for lawful interception in NGNs according to the present invention, where an Administration Function (ADMF) entity 209 serves as the interception information provision entity but the BGF entity 210 does not serve as the interception control network element. As shown in Figure 2B, an existing interception control network element 208 may exercise the function of the interception control network element in the system according to the present invention when an Administration Function (ADMF) entity serves as the interception information provision entity but the BGF entity does not serve as the interception control network element. This interception control network element 208 may be a Lawful Interception Application Server (LI-AS), or a Proxy Call Session Control Function (P-CSCF) entity, or a Serving Call Session Control Function (S-CSCF) entity. It obtains a BGF entity identifier according to the interception data that carries monitored subscriber identifiers from the ADMF entity and sends the media flow description information of monitored subscribers to the ADMF entity according to the obtained BGF entity identifier. The ADMF entity sends the media flow description information of monitored subscribers as monitored object information to the BGF entity determined by the received BGF entity identifier.

Figure 2C shows a basic structure of the system for lawful interception in NGNs according to the present invention, where an interception control network element 212 in the NGN serves as the interception information provision entity. As shown in Figure 2C, in the system for lawful interception according to the present invention, an interception control network element serving as the interception information provision entity may send a message that carries the interception data sent from an ADMF entity to a BGF entity 213, or may send a message that carries the media flow description information of monitored subscribers according to the interception data that carries monitored subscriber identifiers from the ADMF entity to the BGF entity 213 in the session process.

The following drawings and embodiments are merely intended to further demonstrate and illustrate the present invention, but not to limit the scope of the present invention.

### Embodiment 1

Figure 3 shows a flowchart of the method for lawful interception in NGNs according to Embodiment 1 of the present invention. As shown in Figure 2A1 and Figure 3, in Embodiment 1 of the present invention, an ADMF entity of the LEA serves as the interception information provision entity and a BGF entity serves as the interception control network element. The method for lawful interception for subscribers accessing an NGN from fixed networks according to Embodiment 1 of the present invention includes the following steps.

In step 301, a BGF entity in the NGN is connected via an X3 interface with a DF3 entity of the LEA.

In step 302, an ADMF entity of the LEA is connected via an X1_1 interface with the BGF entity.

In step 303, to monitor a subscriber, the ADMF entity of the LEA directly sends interception data that carries monitored subscriber identifiers via the X1_1 interface to the BGF entity.

The interception data mentioned here and hereinafter may further include the other information required for subscriber monitoring, such as the identifier of the ADMF entity, the identifier of the DF3 entity to receive the media flows corresponding to the monitored subscriber(s), or the content to be monitored. Where, the monitored subscriber identifiers may be the Session Initiation Protocol Uniform Resource Identifiers (SIP URIs) or Telephone Uniform Resource Locators (TEL URLs) of monitored subscribers.

The ADMF entity sends the interception data that carries monitored subscriber identifiers to the BGF entity in steps 302 to 303. In this way, the BGF entity serving as the interception control network element obtains the interception data. In Embodiment 1 of the present invention, an entity may be involved to forward the interception data to the BGF entity serving as the interception control network element. As shown in Figure 2A2, an interception data processing function entity is preset in the NGN and connected to both the ADMF entity of the LEA and the BGF entity according to Embodiment 1 of the present invention. The preset interception data processing function entity is connected via an X1_1 interface with the ADMF entity. Therefore, the process consisting of steps 302 and 303 changes as follows:
To monitor a subscriber, the ADMF entity of the LEA directly sends interception data that carries monitored subscriber identifiers via the X1_1 interface to the interception data processing function entity;
The interception data processing function entity forwards the received interception data that carries monitored subscriber identifiers to the BGF entity. The interception data processing function entity may interact with the BGF entity using a Diameter protocol.

In step 304, the BGF entity saves the received interception data that carries monitored subscriber identifiers.

In step 305, a Proxy Call Session Control Function (P-CSCF) entity sends the identifier of the subscriber to be monitored to an SPDF entity after receiving a session setup request (INVITE).

In step 305, the P-CSCF entity may send the identifier of the subscriber in an Authentication/Authorization Request (AA-Request) message to the SPDF entity. Moreover, identify of the subscriber mentioned here and hereinafter may be a SIP URI or TEL URL of the subscriber to be monitored.

In step 306, the SPDF entity sends the identifier of the subscriber to the BGF entity. Here, the SPDF entity interacts with the BGF entity using an H.248 protocol. Therefore, according to the present invention, H.248 protocol messages may be extended in advance so that a subscriber identifier package is added in an H.248 protocol message. For instance, a subscriber identifier package may be added in the following format:
PackageID: normal int (such as 0xCD)
Properties:
Subscriber Identifier:
PropertyID: SubscriberId (0x0001)
Description: It defines the Subscriber Identifier, that is, the identifier of the subscriber to be monitored.
Type: string
Defined in: Local Control descriptor
Characteristics: Read/Write
Events: none
Statistics: none
Signals: none
Procedures: A Media Gateway Controller (MGC) may specify the Subscriber Identifier in any command.

For example, SubscriberId = abcdefg@ims.example.com indicates that the Subscriber Identifier is abcdefg@ims.example.com.

Therefore, in step 306, the SPDF entity may add the identifier of the subscriber in the newly-added subscriber identifier package in an H.248 protocol message such as an Add message and then send the message to the BGF entity.

It should be noted that in steps 305 to 306, the P-CSCF entity does not directly send the identifier of the subscriber to the BGF entity. Instead, the SPDF entity sends the identifier of the subscriber in the subscriber identifier package in an extended H.248 protocol message to the BGF entity. In the practical implementation, in steps 305 to 306 mentioned above, the P-CSCF entity may send the identifier of the subscriber in the subscriber identifier package of an extended H.248 protocol message to the BGF entity: The P-CSCF entity adds the identifier of the subscriber to the extended subscriber identifier package in an H.248 protocol message and then directly sends the message to the BGF entity; alternatively, the P-CSCF entity may add the identifier of the subscriber to the newly-added subscriber identifier package in an H.248 protocol message and sends the message to the SPDF entity, which then transparently transmits the H.248 protocol message to the BGF entity.

In step 307, the BGF entity determines whether the subscriber is a subscriber for lawful interception according to the identifier of the subscriber and its own interception data that carries monitored subscriber identifiers. If the subscriber is a subscriber for lawful interception, step 308 follows. Otherwise, the subsequent call procedure continues and the current process ends.

In step 307, if the BGF entity receives an H.248 protocol message such as an Add message that carries a subscriber identifier package, then the BGF entity analyzes the received Add message and obtains the identifier of the subscriber from the subscriber identifier package in the Add message.

In step 308, the BGF entity allocates duplication resources required for lawful interception.

In step 309, a connection between the caller and the called party is set up in the session. After the caller and the called party enter a conversation, the BGF entity receives the media flows corresponding to the monitored subscriber and then duplicates these media flows using the duplication resources allocated for lawful interception.

In step 310, the BGF entity sends a duplicate of the media flows via the X3 interface to the DF3 entity.

In step 311, the DF3 entity analyzes the received media flows to perform lawful interception for the monitored subscriber that accesses the NGN from a fixed network.

### Embodiment 2

Figure 4 shows a flowchart of the method for lawful interception in NGNs according to Embodiment 2 of the present invention. As shown in Figure 2B and Figure 4, in Embodiment 2 of the present invention, an ADMF entity serves as the interception information provision entity but the BGF entity does not serve as the interception control network element. The method for lawful interception for subscribers accessing an NGN from fixed networks according to Embodiment 2 of the present invention includes the following steps.

In step 401, a BGF entity in the NGN is connected via an X3 interface with a DF3 entity of the LEA.

In step 402, to monitor a subscriber, an ADMF entity of the LEA sends interception data that carries monitored subscriber identifiers via an X1_1 interface to an interception control network element. Here, a P-CSCF entity, or an S-CSCF entity, or an LI-AS serving as the interception control network element can receive the interception data that carries monitored subscriber identifiers. For simplicity of the description, a P-CSCF entity is taken as the interception control network element shown in Figure 2B to describe the subsequent implementation process of Embodiment 2 of the present invention.

In step 403, the P-CSCF entity saves the interception data that carries monitored subscriber identifiers.

In step 404, in the session setup process, the P-CSCF entity determines whether the subscriber to be monitored is a subscriber for lawful interception according to the identifier of the subscriber and its own interception data that carries monitored subscriber identifiers. If the subscriber is a subscriber for lawful interception, step 405 follows. Otherwise, the subsequent call procedure continues and the current process ends.

In step 405, the P-CSCF entity sends the identifier of the BGF entity that the media flows corresponding to the monitored subscriber in the session will pass to the ADMF entity. In this step, the P-CSCF entity may send the identifier of the BGF entity that the media flows of the monitored subscriber will pass to the ADMF entity via a DF2 entity of the LEA.

In step 406, the ADMF entity sends the interception data that carries monitored subscriber identifiers to the BGF entity determined by the received BGF entity identifier.

In step 407, the BGF entity duplicates the media flows corresponding to the monitored subscriber it has received according to the interception data that carries monitored subscriber identifiers.

In step 408, the BGF entity sends a duplicate of the media flows corresponding to the monitored subscriber to the DF3 entity according to the received interception data that carries monitored subscriber identifiers.

In the above-mentioned step 405, the P-CSCF may further send the media flow description information of the monitored subscriber in the session to the ADMF entity. Then the process consisting of steps 406 to 408 changes as follows:
- The ADMF entity sends the media flow description information of the monitored subscriber to the BGF entity determined by the received BGF entity identifier;
- The BGF entity duplicates the media flows corresponding to the monitored subscriber it has received according to the media flow description information of the monitored subscriber, and sends a duplicate of the media flows to the DF3 entity according to the media flow description information of the monitored subscriber it has received. The media flow description information of the monitored subscriber includes the source IP address, destination IP address, source port number and destination port number of the media flows corresponding to the monitored subscriber.

In step 409, the DF3 entity analyzes the received media flows to perform lawful interception for the monitored subscriber that accesses the NGN from a fixed network.

### Embodiment 3

In Embodiment 3 of the present invention, an interception control network element in an NGN serves as the interception information provision entity. The interception control network element sends a message that carries interception data to a BGF entity to trigger the BGF entity to duplicate the media flows corresponding to the monitored subscriber(s).

Figure 5 shows a flowchart of the method for lawful interception in NGNs according to Embodiment 3 of the present invention. As shown in Figure 2C and Figure 5, to ease the description, a Lawful Interception Application Server (LI-AS) in the NGN is taken as the interception control network element. The interception control network element sends a message that carries interception data to a BGF entity to trigger the BGF entity to duplicate the media flows corresponding to the monitored subscriber(s). The method for lawful interception for subscribers accessing the NGN from fixed networks according to Embodiment 3 of the present invention includes the following steps.

In step 501, a BGF entity in the NGN is connected via an X3 interface with a DF3 entity of the LEA.

In step 502, SIP protocol messages, H.248 protocol messages and Diameter protocol messages are extended in advance so that they can bear interception data. In this step, XML-based application may be added as a new content type in a SIP protocol message to extend the SIP protocol message. For instance, the XML-based application may be added in the following format:

```
    Content-type: application/interception-data+xml
    <?xml version=" 1.0"?>
       <interception-data xmlns="urn:ietf:params:xml:ns:interception-data"
                      version="0" state="full"
                      entity="sip:alice@example.com">
         <monitor identity="abcd@example.com">
            <type>both</type>
            <df2addr>sip:df2@lea.com</df2addr>
            <df3addr>sip:df3@lea.com</df3addr>
         </monitor>
       </interception-data>
```

In the XML-based message body mentioned above, the identifier of the current monitored subscriber is given as abcd@example.com and it is clarified that both the Interception-Related Information (IRI) and the Communication Content (CC) need to be output for the monitored subscriber. Furthermore, the address to which the IRI is to be output is specified as df2@lea.com and the address to which the monitored content is to be output is specified as df3@lea.com.

In Step 502, an interception data package may be added to H.248 protocol messages during the extension of H.248 protocol messages. For instance, an interception data package may be added in the following format:
Lawful Interception Data Package
PackageID: normal int (such as 0xCE)
Properties :
Monitored Subscriber Identifier:
PropertyID: SubscriberId (0x0001)
Description: It defines the Monitored Subscriber Identifier of a monitored object.
Type: string
Defined in: Local Control descriptor
Characteristics: Read/Write
Monitor Type:
PropertyID: MonitorType (0x0002)
Description: It defines the current Monitor Type for the monitored subscriber. If this attribute is not indicated, neither the IRI nor the Communication Content (CC) needs to be output for the monitored subscriber.
Type: Enumeration
Possible Values:
"None" (0x0000): No output
"IRI" (0x0001): Output the IRI only
"CC" (0x0002): Output the CC only
"Both" (0x0003): Output both the IRI and the CC
Default: " None " (0x0000)
Defined in: Local Control descriptor
Characteristics: Read/Write
DF2 Address:
PropertyID: DF2Address (0x0003)
Description: It defines the DF2 address to which the IRI of the monitored subscriber is to be output.
Type: string
Defined in: Local Control descriptor
Characteristics: Read/Write
DF3 Address:
PropertyID: DF3Address (0x0004)
Description: It defines the DF3 address to which the CC of the monitored subscriber is to be output.
Type: string
Defined in: Local Control descriptor
Characteristics: Read/Write
Events: none
Statistics: none
Signals: none
Procedures: An MGC may carry the interception data package in any command to indicate the monitored subscriber and the interception data of the subscriber.

In Step 502, an Attribute Value Pair (AVP) may be added to the previously-mentioned Diameter protocol message during the extension of a Diameter protocol message. For instance, an AVP may be added in the following format:
Attribute Name: Monitor-Data
AVP Code: An integer value such as 530. It is recommended that the AVP should carry a V bit and an M bit to indicate that the AVP is vendor-specific and must be identified by the receiver. End-to-end security encryption is allowed.
Value Type: Grouped

The AVP assumes the following format:
AVP Format:
Globally-Unique-IP-Address ::= < AVP Header: xxx 13019 >
   [Monitored-Subscriber-Identifier]
   [Monitor-Type]
   [Delivery-Function2-Address]
   [Delivery-Function3-Address]

Where, the Monitored-Subscriber-Identifier attribute describes the identifier of the current monitored subscriber, the Monitor-Type attribute describes whether the CC and/or the IRI of the current monitored subscriber needs to be output, the Delivery-Function2-Address attribute specifies the address to which the IRI is to be output, and the Delivery-Function3-Address attribute specifies the address to which the CC is to be output.

In step 503, to monitor a subscriber, an ADMF entity of the LEA sends interception data that carries monitored subscriber identifiers via an X1_1 interface to an interception control network element. Here, a P-CSCF entity, or an S-CSCF entity, or an LI-AS serving as the interception control network element can receive the interception data that carries monitored subscriber identifiers.

In step 504, the LI-AS saves the received interception data that carries monitored subscriber identifiers.

In step 505, in the session setup process, the LI-AS determines whether the subscriber to be monitored is a subscriber for lawful interception according to the identifier of the subscriber and its own interception data that carries monitored subscriber identifiers. If the subscriber is a subscriber for lawful interception, step 506 follows. Otherwise, the subsequent call procedure continues and the current process ends.

In step 506, the LI-AS adds itself to the signaling route in the current session and sends a session setup request to the called subscriber.

In step 507, the LI-AS receives a SIP protocol response message from the called subscriber and then adds its own interception data that carries monitored subscriber identifies to the SIP protocol response message. Here, the LI-AS may add the interception data it saves to the XML-based message body of a SIP protocol response message.

In step 508, the LI-AS sends the SIP protocol response message that carries interception data to a P-CSCF entity.

It should be noted that the LI-AS involved in steps 504 to 508 may be replaced by an S-CSCF entity.

In step 509, the P-CSCF entity sends a Diameter protocol message that carries interception data to an SPDF entity. Here, the P-CSCF entity obtains interception data from the XML-based message body of the SIP protocol response message it has received, adds the interception data to the newly-added attribute value in a Diameter protocol response message, and then sends the Diameter protocol response message to the SPDF entity.

In step 510, the SPDF entity obtains interception data from the Diameter protocol response message it has received, adds the interception data to the extended interception data package of an H.248 protocol message, and sends the H.248 protocol message to the BGF entity.

In step 511, the BGF entity interprets the extended interception data package in the H.248 protocol message and obtains the interception data.

In step 512, the BGF entity duplicates the media flows corresponding to the monitored subscriber according to the interception data it has received, and sends a duplicate of the media flows via the X3 interface to the DF3 entity.

In step 513, the DF3 entity analyzes the received media flows to perform lawful interception for the monitored subscriber that accesses the NGN from a fixed network.

In Embodiment 3 of the present invention, alternatively the P-CSCF may construct a Diameter protocol message that carries interception data and then send the Diameter protocol message via the SPDF entity to the BGF entity in a similar way to that described in Figure 5, except that the SIP message does not need to be extended.

### Embodiment 4

In Embodiment 4 of the present invention, an interception control network element in an NGN serves as the interception information provision entity. The interception control network element sends a message that carries media flow topology description to a BGF entity to trigger the BGF entity to duplicate the media flows corresponding to the monitored subscriber(s).

Figure 6 shows a flowchart of the method for lawful interception in NGNs according to Embodiment 4 of the present invention. As shown in Figure 2C and Figure 6, to ease the description, a P-CSCF entity in an NGN is taken as the interception control network element. The interception control network element sends a message that carries media flow topology description to a BGF entity to trigger the BGF entity to duplicate the media flows corresponding to the monitored subscriber(s). The method for lawful interception for subscribers accessing the NGN from fixed networks according to Embodiment 4 of the present invention includes the following steps.

In step 601, a BGF entity in the NGN is connected via an X3 interface with a DF3 entity of the LEA.

In step 602, SIP protocol messages, H.248 protocol messages and Diameter protocol messages are extended in advance so that they can bear media flow description information of monitored subscribers.

In Step 602, a new content type (XML-based application) may be added in a SIP protocol message to extend the SIP protocol message, so that the message body carries the media flow description information of monitored subscribers. For instance, the XML-based application may be added in the following format:

```
    Content-type: application/session-topology+xml
    <?xml version=" 1.0"?>
       <session-topology xmlns="urn:ietf params:xml:ns:session-topology"
                      version="0" state="full"
                      entity="sip:alice@example.com">
          <session name="abcd@example.com">
             <copiedstream>
                <sourceaddr>[5555:: 1:2:3:4]:1357</sourceaddr>
               <destinationaddr>[5555::a:b:c:d]:7531 </destinationaddr>
                <protocol>RTP</protocol>
      </copiedstream>
      <direction>upstream</direction>
         </session>
       </interception-data>
```

In the above-mentioned XML message body, it is clarified that the upstream media flows from [5555::1:2:3:4]:1357 to [5555::a:b:c:d]:7531 need to be duplicated for the current call.

In step 602, the standard H.248 topology description mode may be utilized to describe the topology relations between the endpoints in a Context. For the specific implementation, refer to Annex D in 3GPP 33107. Similarly, the previously-mentioned H.248 protocol message may also be extended, so that the H.248 protocol message can carry the media flow description information of monitored subscribers in an existing extended H.248 interception data package according to the following method:
Define the identifier of the interception data package.
Define the Interception indication of the interception data package, so as to indicate the master/slave attribute of the endpoints. The Interception indication attribute indicates whether the terminal at an endpoint is a slave or common terminal. If this attribute is not indicated for a terminal, the terminal is regarded as a common terminal having nothing to do with duplication.
Define the Master termination of the monitored endpoints. The Master termination attribute specifies the terminal identifier of an endpoint whose media flows are to be duplicated by a slave terminal. An endpoint whose media flows are to be duplicated is called a master endpoint and the Interception indication of a master endpoint is "common". Master termination is effective for a slave endpoint and is a string of eight bytes.
Define the Interception mode of the monitored endpoints. The value of this attribute may be "upstream", or "downstream", or "both". This attribute indicates the mode of the connection between a slave terminal and an endpoint whose media flows are to be duplicated, that is, whether to duplicate the upstream media flows, or the downstream media flows, or both the upstream and the downstream media flows of the source endpoint. This attribute is effective for a slave endpoint.
When one or multiple endpoints are indicated as slave in a Context and the master endpoint and the duplication mode of the slave endpoint(s) are specified, the slave endpoint(s) will duplicate the relevant data packages of the specified Interception mode from the specified master endpoint.

In Step 602, an Attribute Value Pair (AVP) may be added to the previously-mentioned Diameter protocol message during the extension of a Diameter protocol message, so that the Diameter protocol message can carry the media flow description information of monitored subscribers. For instance, an AVP may be added in the following format:
Attribute Name: Stream-Copied
AVP Code: An integer value such as 531. It is recommended that the AVP should carry a V bit and an M bit to indicate that the AVP is vendor-specific and must be identified by the receiver. End-to-end security encryption is allowed.
Value Type: Grouped

The AVP assumes the following format:
AVP Format:
Globally-Unique-IP-Address ::= < AVP Header: xxx 13019 >
   [Media-Stream-Description]
   [Copy-Direction]

Where, Media-Stream-Description describes the media flow information to be duplicated. For instance, Media-Stream-Description may specify the source IP address, destination IP address, source port number, destination port number, and protocol type of the media flows to be duplicated. Copy-Direction describes the duplication direction of the media flows to be duplicated. For instance, Copy-Direction may indicate that only the media flows from the source IP address to the destination IP address are to be duplicated.

In step 603, to monitor a subscriber, an ADMF entity of the LEA sends interception data that carries monitored subscriber identifiers via the X1_1 interface to a P-CSCF entity serving as the interception control network element.

In step 604, the P-CSCF entity saves the received interception data that carries monitored subscriber identifiers.

In step 605, in the session setup process, the P-CSCF entity determines whether the subscriber to be monitored is a subscriber for lawful interception according to the identifier of the subscriber and its own interception data that carries monitored subscriber identifiers. If the subscriber is a subscriber for lawful interception, step 606 follows. Otherwise, the subsequent call procedure continues and the current process ends.

In step 606, the P-CSCF entity adds the media flow description information of the monitored subscriber in this session to a Diameter protocol response message and sends the Diameter protocol response message to an SPDF entity. Here, according to the process given in Step 602 for extending a Diameter protocol message, the P-CSCF entity may use the attribute value newly added in a Diameter protocol response message to carry the media flow description information of the monitored subscriber.

In step 607, the SPDF entity adds the media flow description information of the monitored subscriber in this session to an H.248 protocol response message and sends the H.248 protocol response message to the BGF entity. Here, according to the process given in Step 602 for extending an H.248 protocol message, the SPDF entity may use the interception data package newly added in an H.248 protocol response message to carry the media flow description information of the monitored subscriber.

In step 608, the BGF entity obtains the media flow description information of the monitored subscriber in this session from the response message it has received.

In step 609, the BGF entity duplicates the media flows corresponding to the monitored subscriber according to the media flow description information of the monitored subscriber it has received, and sends a duplicate of the media flows via the X3 interface to the DF3 entity.

In step 610, the DF3 entity analyzes the received media flows to perform lawful interception for the monitored subscriber that accesses the NGN from a fixed network.

In Embodiment 4 of the present invention, the P-CSCF entity first constructs a message that carries the media flow description information of monitored subscribers and then sends the message via the SPDF entity to the BGF entity. In the practical implementation, the LI-AS or the S-CSCF entity may first construct an extended SIP protocol message that carries the media flow description information of monitored subscribers and then send the message via the P-CSCF entity and the SPDF entity to the BGF entity in a way similar to that described in Figure 6.

In the present invention, the query command, lawful interception deactivation command or other commands sent by the ADMF entity may be sent in the methods according to the embodiments of the present invention to the BGF entity, so as to trigger the BGF entity to query the relevant attributes of the monitored subscriber(s), or cancel lawful interception, or perform other related operations.

According to the present invention, the subscriber(s) to be monitored may be the calling subscriber and/or the called subscriber in the session.

According to the present invention, the BGF entity may be an Access Border Gateway Function (A-BGF) entity that provides connections between subscriber terminals and the access network, or a Core Border Gateway Function (C-BGF) entity that provides connections between the access network and the core network.

While this invention has been particularly shown and described with reference to preferred embodiments thereof, it will be understood by those skilled in the art that various changes in form and details may be made therein without departing from the scope of the invention as defined by the appended claims.

## Claims

1. A method for lawful interception for subscribers accessing next generation networks from fixed networks, wherein a Border Gateway Function entity of the next generation networks is connected to a Delivery Function 3 entity of a Law Enforcement Agency, and the method comprising:
A, receiving, by the Border Gateway Function entity monitored object information sent from an interception information provision entity, wherein the interception information provision entity is an Administration Function entity of the Law Enforcement Agency, the step A further comprises:
A21, sending, by the Administration Function entity of the Law Enforcement Agency, the interception data carrying monitored subscriber identifiers to an existing interception control network element, and the interception control network element storing the received interception data carrying monitored subscriber identifiers;
A22, determining, by the interception control network element, whether a subscriber is a monitored subscriber according to the stored interception data carrying monitored subscriber identifiers and an identifier of the subscriber in a session setup process, if the subscriber is a monitored subscriber, performing step A23;
A23, sending, by the interception control network element, an identifier of the Border Gateway Function entity to the Administration Function entity of the Law Enforcement Agency, wherein media flows corresponding to the monitored subscriber passes through the Border Gateway Function entity;
A24, receiving, by the Border Gateway Function entity the monitored object information sent from the Administration Function entity of the Law Enforcement Agency, wherein the Administration Function entity of the Law Enforcement Agency sends the monitored object information to the Border Gateway Function entity according to the received identifier of the Border Gateway Function entity; and
B, sending, by the Border Gateway Function entity, media flows corresponding to the monitored subscriber(s) to the Delivery Function 3 entity according to the received monitored object information.

2. The method according to claim 1, wherein the interception control network element comprises: Lawful Interception Application Server, LI-AS, or a Proxy Call Session Control Function, P-CSCF, entity, or a Serving Call Session Control Function, S-CSCF, entity.

3. The method according to claim 1 or 2, further comprising:
extending an H.248 protocol message and diameter protocol message;
wherein the interception control network element is a Proxy Call Session Control Function entity;
before step A, the method further comprises:
sending, by an Administration Function entity of a Law Enforcement Agency, interception data carrying monitored subscriber identifiers to the Proxy Call Session Control Function entity;
and the step A comprises:
A31, determining, by the Proxy Call Session Control Function entity, whether a subscriber is a monitored subscriber according to the received interception data carrying monitored subscriber identifiers and an identifier of the subscriber in a session setup process, if yes, turning to step A32;
A32, sending, by the Proxy Call Session Control Function entity, the monitored object information to a service policy decision function entity via the extended diameter protocol message;
A33, receiving, by the Border Gateway Function entity the monitored object information sent from the service policy decision function entity via the extended H.248 protocol message.

4. The method according to claim 1 or 2, further comprising:
extending an H.248 protocol message, diameter protocol message and session initiation protocol message;
wherein before step A, the method further comprises:
receiving interception data carrying monitored subscriber identifiers from an Administration Function entity of a Law Enforcement Agency;
and wherein the step A comprises:
A41, determining whether a subscriber is a monitored subscriber according to the received interception data carrying monitored subscriber identifiers and an identifier of the subscriber in a session setup process, if yes, turning to step A42;
A42, sending the monitored object information to a Proxy Call Session Control Function entity via the extended session initiation protocol message;
A43, sending, by the Proxy Call Session Control Function entity, the monitored object information to a service policy decision function entity via the extended diameter protocol message;
A44, receiving, by the Border Gateway Function entity the monitored object information sent from the service policy decision function entity via the extended H.248 protocol message.

5. The method according to claim 4, wherein a lawful interception application server or a Server Call Session Control Function entity performs the procedure of receiving interception data, determining and sending the monitored object information to the Proxy Call Session Control Function entity via the extended session initiation protocol message.

6. The method according to claim 3, 4 or 5, wherein
the procedure for extending the H.248 protocol message comprises:
adding an interception data package in the H.248 protocol message; and
the procedure for sending the monitored object information to the Border Gateway Function entity via the extended H.248 protocol message comprises:
carrying, by the service policy decision function entity, the monitored object information in the added interception data package of the H.248 protocol message, and sending the H.248 protocol message to the Border Gateway Function entity.

7. The method according to claim 3, 4 or 5, wherein
the procedure for extending the diameter protocol message comprises:
adding an attribute value pair in the diameter protocol message; and
the procedure of sending the monitored object information to the service policy decision function entity via the diameter protocol message comprises:
carrying the monitored object information in the added attribute value pair of the diameter protocol message, and sending the diameter protocol message to the service policy decision function entity.

8. The method according to claim 4, wherein the procedure for extending the session initiation protocol message comprises:
adding an application type based XML format in the session initiation protocol message;
and wherein the step A42 comprises:
carrying the monitored object information in a message body of the application type based XML format, and sending the session initiation protocol message to Proxy Call Session Control Function entity.

9. A system for lawful interception for subscribers accessing next generation networks from fixed networks, comprising:
a Delivery Function 3 entity (103, 203, 207, 211, 214) adapted to receive media flows corresponding to monitored subscribers and analyze the received media flows so as to monitor subscribers;
wherein the system further comprises: an interception information provision entity (101), an interception control network element (208, 212), and a Border Gateway Function entity (102, 202, 206, 210, 213); wherein
the interception information provision entity (101) is an Administration Function entity of a Law Enforcement Agency,
the interception control network element (208, 212), adapted to receive the interception data carrying monitored subscriber identifiers sent from the Administration Function of the Law Enforcement Agency, obtain an identifier of the Border Gateway Function entity passed through by the media flows corresponding to monitored subscribers, and send the obtained identifier of the Border Gateway Function entity to the Administration Function entity of the Law Enforcement Agency;
the Administration Function entity of the Law Enforcement Agency is adapted to send monitored object information to the Border Gateway Function entity; and
the Border Gateway Function entity (102, 202, 206, 210, 213) is adapted to send media flows corresponding to the monitored subscribers to the Delivery Function 3 entity according to the received the monitored object information.

10. The system according to claim 9, wherein the Administration Function entity of a Law Enforcement Agency is connected to the Border Gateway Function entity (102, 202, 206, 210, 213) via X1_1 interface.

11. The system according to claim 9, further comprising:
an interception data processing function entity (205), adapted to receive interception data carrying monitored subscriber identifiers from the Administration Function entity of the Law Enforcement Agency via X1_1 interface, and send the interception data carrying monitored subscriber identifiers to the Border Gateway Function entity;
wherein the Administration Function entity of the Law Enforcement Agency is adapted to send the interception data carrying monitored subscriber identifiers to the interception data processing function entity.

12. The system according to claim 9, wherein the interception information provision entity (101) is existing interception control network element adapted to obtain description information of the media flows corresponding to the monitored subscriber according to interception data carrying monitored subscriber identifiers sent from an Administration Function of an Law Enforcement Agency, and send the description information of the media flows corresponding to the monitored subscriber to the Border Gateway Function entity, or send directly the interception data carrying monitored subscriber identifiers to the Border Gateway Function entity;
wherein the Border Gateway Function entity (102, 202, 206, 210, 213) is adapted to send the received description information of the media flows corresponding to the monitored subscriber or the interception data carrying monitored subscriber identifiers to the Delivery Function 3 entity.

## Patentansprüche

1. Verfahren zum legalen Abfangen für Teilnehmer, die von Festnetzen auf Netzwerke der nächsten Generation zugreifen, wobei eine Grenzgatewayfunktion-Entität der Netzwerke der nächsten Generation mit einer Zustellungsfunktion-3-Entität einer Strafverfolgungsbehörde verbunden ist, und das Verfahren umfassend:
A, Empfangen, durch die Grenzgatewayfunktion-Entität, von überwachten Objektinformationen, gesandt von einer Abfanginformationenbereitstellung-Entität, wobei die Abfanginformationenbereitstellung-Entität eine Verwaltungsfunktion-Entität der Strafverfolgungsbehörde ist, wobei der Schritt A ferner umfasst:
A21, Senden, durch die Verwaltungsfunktion-Entität der Strafverfolgungsbehörde, der Abfangdaten, die überwachte Teilnehmerkennungen führen, zu einem existierenden Abfangsteuerung-Netzwerkelement und Speichern, durch das Abfangsteuerung-Netzwerkelement, der empfangenen Abfangdaten, die überwachte Teilnehmerkennungen führen;
A22, Bestimmen, durch das Abfangsteuerung-Netzwerkelement, ob ein Teilnehmer ein überwachter Teilnehmer ist, gemäß den gespeicherten Abfangdaten, die überwachte Teilnehmerkennungen und eine Kennung des Teilnehmers in einem Sitzungseinrichtungsprozess führen, wenn der Teilnehmer ein überwachter Teilnehmer ist, Durchführen von Schritt A23;
A23, Senden, durch das Abfangsteuerung-Netzwerkelement, einer Kennung der Grenzgatewayfunktion-Entität zu der Verwaltungsfunktion-Entität der Strafverfolgungsbehörde, wobei Medienströme, die mit dem überwachten Teilnehmer korrespondieren, die Grenzgatewayfunktion-Entität durchlaufen;
A24, Empfangen, durch die Grenzgatewayfunktion-Entität, der von der Verwaltungsfunktion-Entität der Strafverfolgungsbehörde gesandten überwachten Objektinformationen, wobei die Verwaltungsfunktion-Entität der Strafverfolgungsbehörde die überwachten Objektinformationen gemäß der empfangenen Kennung der Grenzgatewayfunktion-Entität zu der Grenzgatewayfunktion-Entität sendet; und
B, Senden, durch die Grenzgatewayfunktion-Entität, von mit dem (den) überwachten Teilnehmer(n) korrespondierenden Medienströmen zu der Zustellungsfunktion-3-Entität gemäß den empfangenen überwachten Objektinformationen.

2. Verfahren nach Anspruch 1, wobei das Abfangsteuerung-Netzwerkelement umfasst:
eine Entität eines Anwendungsservers für legales Abfangen, LI-AS, oder einer Proxy-Anrufsitzungssteuerungsfunktion, P-CSCF, oder eine Entität einer Versorgungs-Anrufsitzungssteuerungsfunktion, S-CSCF.

3. Verfahren nach Anspruch 1 oder 2, ferner umfassend:
Erweitern einer H.248-Protokoll-Nachricht und Diameter-Protokoll-Nachricht;
wobei das Abfangsteuerung-Netzwerkelement eine Proxy-Anrufsitzungssteuerungsfunktion-Entität ist;
wobei das Verfahren vor Schritt A ferner umfasst:
Senden, durch eine Verwaltungsfunktion-Entität einer Strafverfolgungsbehörde, von Abfangdaten, die überwachte Teilnehmerkennungen führen, zu der Proxy-Anrufsitzungssteuerungsfunktion-Entität;
und der Schritt A umfasst:
A31, Bestimmen, durch die Proxy-Anrufsitzungssteuerungsfunktion-Entität, ob ein Teilnehmer ein überwachter Teilnehmer ist, gemäß den empfangenen Abfangdaten, die überwachte Teilnehmerkennungen und eine Kennung des Teilnehmers in einem Sitzungseinrichtungsprozess führen, wenn ja, Wenden zu Schritt A32;
A32, Senden, durch die Proxy-Anrufsitzungssteuerungsfunktion-Entität, der überwachten Objektinformationen zu einer Dienstregelentscheidungsfunktion-Entität über die erweiterte Diameter-Protokoll-Nachricht;
A33, Empfangen, durch die Grenzgatewayfunktion-Entität, der überwachten Objektinformationen, gesandt von der Dienstregelentscheidungsfunktion-Entität über die erweiterte H.248-Protokoll-Nachricht.

4. Verfahren nach Anspruch 1 oder 2, ferner umfassend:
Erweitern einer H.248-Protokoll-Nachricht, Diameter-Protokoll-Nachricht und Sitzungseinleitungsprotokoll-Nachricht;
wobei das Verfahren vor Schritt A ferner umfasst:
Empfangen von Abfangdaten, die überwachte Teilnehmerkennungen führen, von einer Verwaltungsfunktion-Entität einer Strafverfolgungsbehörde;
und wobei der Schritt A umfasst:
A41, Bestimmen, ob ein Teilnehmer ein überwachter Teilnehmer ist, gemäß den empfangenen Abfangdaten, die überwachte Teilnehmerkennungen und eine Kennung des Teilnehmers in einem Sitzungseinrichtungsprozess führen, wenn ja, Wenden zu Schritt A42;
A42, Senden der überwachten Objektinformationen zu einer Proxy-Anrufsitzungssteuerungsfunktion-Entität über die erweiterte Sitzungseinleitungprotokoll-Nachricht;
A43, Senden, durch die Proxy-Anrufsitzungssteuerungsfunktion-Entität, der überwachten Objektinformationen zu einer Dienstregelentscheidungsfunktion-Entität über die erweiterte Diameter-Protokoll-Nachricht;
A44, Empfangen, durch die Grenzgatewayfunktion-Entität, der überwachten Objektinformationen, gesandt von der Dienstregelentscheidungsfunktion-Entität, über die erweiterte H.248-Protokoll-Nachricht.

5. Verfahren nach Anspruch 4, wobei ein Anwendungsserver für legales Abfangen oder eine Server-Anrufsitzungssteuerungsfunktion-Entität die Prozedur des Empfangens von Abfangdaten, Bestimmens und Sendens der überwachten Objektinformationen zu der Proxy-Anrufsitzungssteuerungsfunktion-Entität über die erweiterte Sitzungseinleitungsprotokoll-Nachricht durchführt.

6. Verfahren nach Anspruch 3, 4 oder 5, wobei
die Prozedur zum Erweitern der H.248-Protokoll-Nachricht umfasst:
Hinzufügen eines Abfangdatenpakets in die H.248-Protokoll-Nachricht; und
die Prozedur zum Senden der überwachten Objektinformationen zu der Grenzgatewayfunktion-Entität über die erweiterte H.248-Protokoll-Nachricht umfasst:
Führen, durch die Dienstregelentscheidungsfunktion-Entität, der überwachten Objektinformationen in dem hinzugefügten Abfangdatenpaket der H.248-Protokoll-Nachricht und Senden der H.248-Protokoll-Nachricht zu der Grenzgatewayfunktion-Entität.

7. Verfahren nach Anspruch 3, 4 oder 5, wobei
die Prozedur zum Erweitern der Diameter-Protokoll-Nachricht umfasst:
Hinzufügen eines Attributwertepaars in die Diameter-Protokoll-Nachricht; und
die Prozedur zum Senden der überwachten Objektinformationen zu der Dienstregelentscheidungsfunktion-Entität über die Diameter-Protokoll-Nachricht umfasst:
Führen der überwachten Objektinformationen in dem hinzugefügten Attributwertepaar der Diameter-Protokoll-Nachricht und Senden der Diameter-Protokoll-Nachricht zu der Dienstregelentscheidungsfunktion-Entität.

8. Verfahren nach Anspruch 4, wobei die Prozedur zum Erweitern der Sitzungseinleitungsprotokoll-Nachricht umfasst:
Hinzufügen eines anwendungstypbasierten XML-Formats in die Sitzungseinleitungsprotokoll-Nachricht;
und wobei der Schritt A42 umfasst:
Führen der überwachten Objektinformationen in einem Nachrichtenkörper des anwendungstypbasierten XML-Formats und Senden der Sitzungseinleitungsprotokoll-Nachricht zu der Proxy-Anrufsitzungssteuerungsfunktion-Entität.

9. System zum legalen Abfangen für Teilnehmer, die von Festnetzen auf Netzwerke der nächsten Generation zugreifen, umfassend:
eine Zustellungsfunktion-3-Entität (103, 203, 207, 211, 214), angepasst zum Empfangen von Medienströmen, die mit überwachten Teilnehmern korrespondieren, und Analysieren der empfangenen Medienströme, um Teilnehmer zu überwachen;
wobei das System ferner umfasst: eine Abfanginformationenbereitstellung-Entität (101), ein Abfangsteuerung-Netzwerkelement (208, 212) und eine Grenzgatewayfunktion-Entität (102, 202, 206, 210, 213); wobei die Abfanginformationenbereitstellung-Entität (101) eine Verwaltungsfunktion-Entität einer Strafverfolgungsbehörde ist,
das Abfangsteuerung-Netzwerkelement (208, 212) angepasst ist zum Empfangen der Abfangdaten, die überwachte Teilnehmerkennungen führen, gesandt von der Verwaltungsfunktion der Strafverfolgungsbehörde, Erhalten einer Kennung der Grenzgatewayfunktion-Entität, die die Medienströme durchlaufen, die mit überwachten Teilnehmern korrespondieren, und Senden der erhaltenen Kennung der Grenzgatewayfunktion-Entität zu der Verwaltungsfunktion-Entität der Strafverfolgungsbehörde;
die Verwaltungsfunktion-Entität der Strafverfolgungsbehörde angepasst ist zum Senden überwachter Objektinformationen zu der Grenzgatewayfunktion-Entität; und
die Grenzgatewayfunktion-Entität (102, 202, 206, 210, 213) angepasst ist zum Senden von Medienströmen, die mit den überwachten Teilnehmern korrespondieren, zu der Zustellungsfunktion-3-Entität gemäß den empfangenen überwachten Objektinformationen.

10. System nach Anspruch 9, wobei die Verwaltungsfunktion-Entität einer Strafverfolgungsbehörde über eine X1_1-Schnittstelle mit der Grenzgatewayfunktion-Entität (102, 202, 206, 210, 213) verbunden ist.

11. System nach Anspruch 9, ferner umfassend:
eine Abfangdatenverarbeitungsfunktion-Entität (205) angepasst zum Empfangen von Abfangdaten, die überwachte Teilnehmerkennungen führen, von der Verwaltungsfunktion-Entität der Strafverfolgungsbehörde über eine X1_1-Schnittstelle und Senden der Abfangdaten, die überwachte Teilnehmerkennungen führen, zu der Grenzgatewayfunktion-Entität;
wobei die Verwaltungsfunktion-Entität der Strafverfolgungsbehörde angepasst ist zum Senden der Abfangdaten, die überwachte Teilnehmerkennungen führen, zu der Abfangdatenverarbeitungsfunktion-Entität.

12. System nach Anspruch 9, wobei die Abfanginformationenbereitstellung-Entität (101) ein existierendes Abfangsteuerung-Netzwerkelement ist, angepasst zum Erhalten von Beschreibungsinformationen der Medienströme, die mit dem überwachten Teilnehmer korrespondieren, gemäß Abfangdaten, die überwachte Teilnehmerkennungen führen, gesandt von einer Verwaltungsfunktion einer Strafverfolgungsbehörde, und Senden der Beschreibungsinformationen der Medienströme, die mit dem überwachten Teilnehmer korrespondieren, zu der Grenzgatewayfunktion-Entität oder direktes Senden der Abfangdaten, die überwachte Teilnehmerkennungen führen, zu der Grenzgatewayfunktion-Entität;
wobei die Grenzgatewayfunktion-Entität (102, 202, 206, 210, 213) angepasst ist zum Senden der empfangenen Beschreibungsinformationen der Medienströme, die mit dem überwachten Teilnehmer korrespondieren, oder der Abfangdaten, die überwachte Teilnehmerkennungen führen, zu der Zustellungsfunktion-3-Entität.

## Revendications

1. Procédé pour une interception légale pour des abonnés accédant à des réseaux de prochaine génération depuis des réseaux fixes, où une entité de Fonction de Passerelle Frontière des réseaux de prochaine génération est connectée à une entité de Fonction de Délivrance 3 d'un Organisme d'Application de la Loi, et le procédé comprenant les étapes suivantes :
A, recevoir, par l'intermédiaire de l'entité de Fonction de Passerelle Frontière, des informations d'objet surveillé envoyées depuis une entité de délivrance d'informations d'interception, où l'entité de délivrance d'informations d'interception est une entité de Fonction d'Administration de l'Organisme d'Application de la Loi, l'étape A comprenant en outre les étapes suivantes :
A21, envoyer, par l'intermédiaire de l'entité de Fonction d'Administration de l'Organisme d'Application de la Loi, les données d'interception acheminant des identifiants d'abonnés surveillés à un élément de réseau de contrôle d'interception existant, et l'élément de réseau de contrôle d'interception stockant les données d'interception reçues acheminant des identifiants d'abonnés surveillés ;
A22, déterminer, par l'intermédiaire de l'élément de réseau de contrôle d'interception, si un abonné est un abonné surveillé conformément aux données d'interception stockées acheminant des identifiants d'abonnés surveillés et à un identifiant de l'abonnée dans un processus de configuration de session, si l'abonné est un abonné surveillé, exécuter l'étape A23 ;
A23, envoyer, par l'intermédiaire de l'élément de réseau de contrôle d'interception, un identifiant de l'entité de Fonction de Passerelle Frontière à l'entité de Fonction d'Administration de l'Organisme d'Application de la Loi, où les flux de média correspondant à l'abonné surveillé traversent l'entité de Fonction de Passerelle Frontière ;
A24, recevoir, par l'intermédiaire de l'entité de Fonction de Passerelle Frontière, les informations d'objet surveillé envoyées depuis l'entité de Fonction d'Administration de l'Organisme d'Application de la Loi, où l'entité de Fonction d'Administration de l'Organisme d'Application de la Loi envoie les informations d'objet surveillé à l'entité de Fonction de Passerelle Frontière conformément à l'identifiant reçu de l'entité de Fonction de Passerelle Frontière ; et
B, envoyer, par l'intermédiaire de l'entité de Fonction de Passerelle Frontière, des flux de média correspondant à l'/aux abonné(s) surveillé(s), à l'entité de Fonction de Délivrance 3 conformément aux informations d'objet surveillé reçues.

2. Procédé selon la revendication 1, dans lequel l'élément de réseau de contrôle d'interception comprend : un serveur d'application d'interception légale, LI-AS, ou une entité de Fonction de Contrôle de Session d'Appel Mandataire, P-CSCF, ou une entité de Fonction de Contrôle de Session d'Appel de Desserte, S-CSCF.

3. Procédé selon la revendication 1 ou la revendication 2, comprenant en outre l'étape suivante :
étendre un message de protocole H.248 et un message de protocole de diamètre ;
où l'élément de réseau de contrôle d'interception est une entité de Fonction de Contrôle de Session d'Appel Mandataire ;
avant l'étape A, le procédé comprend en outre l'étape suivante :
envoyer, par l'intermédiaire d'une entité de Fonction d'Administration d'un Organisme d'Application de la Loi, des données d'interception acheminant des identifiants d'abonnés surveillés à l'entité de Fonction de Contrôle de Session d'Appel Mandataire ;
et l'étape A comprend les étapes suivantes :
A31, déterminer, par l'intermédiaire de l'entité de Fonction de Contrôle de Session d'Appel Mandataire, si un abonné est un abonné surveillé conformément aux données d'interception reçues acheminant des identifiants d'abonnés surveillés et à un identifiant de l'abonné dans un processus de configuration de session, dans l'affirmative, aller à l'étape A32 ;
A32, envoyer, par l'intermédiaire de l'entité de Fonction de Contrôle de Session d'Appel Mandataire, les informations d'objet surveillé à une entité de fonction de décision de politique de service via le message de protocole de diamètre étendu ;
A33, recevoir, par l'intermédiaire de l'entité de Fonction de Passerelle Frontière, les informations d'objet surveillé envoyées depuis l'entité de fonction de décision de politique de service via le message de protocole H.248 étendu.

4. Procédé selon la revendication 1 ou la revendication 2, comprenant en outre les étapes suivantes :
étendre un message de protocole H.248, un message de protocole de diamètre et un message de protocole d'ouverture de session ;
où avant l'étape A, le procédé comprend en outre l'étape suivante :
recevoir des données d'interception acheminant des identifiants d'abonnés surveillés depuis une entité de Fonction d'Administration d'un Organisme d'Application de la Loi ;
et où l'étape A comprend les étapes suivantes :
A41, déterminer si un abonné est un abonné surveillé conformément aux données d'interception reçues acheminant des identifiants d'abonnés surveillés et à un identifiant de l'abonné dans un processus de configuration de session, dans l'affirmative, aller à l'étape A42 ;
A42, envoyer les informations d'objet surveillé à une entité de Fonction de Contrôle de Session d'Appel Mandataire via le message de protocole d'ouverture de session étendu ;
A43, envoyer, par l'intermédiaire de l'entité de Fonction de Contrôle de Session d'Appel Mandataire, les informations d'objet surveillé à une entité de fonction de décision de politique de service via le message de protocole de diamètre étendu ;
A44, recevoir, par l'intermédiaire de l'entité de Fonction de Passerelle Frontière, les informations d'objet surveillé envoyées depuis l'entité de fonction de décision de politique de service via le message de protocole H.248 étendu.

5. Procédé selon la revendication 4, dans lequel un serveur d'application d'interception légale ou une entité de Fonction de Contrôle de Session d'Appel de Serveur exécute la procédure comprenant de recevoir de données d'interception, déterminer et envoyer les informations d'objet surveillé à l'entité de Fonction de Contrôle de Session d'Appel Mandataire via le message de protocole d'ouverture de session étendu.

6. Procédé selon les revendications 3, 4 ou 5, dans lequel :
la procédure pour étendre le message de protocole H.248 comprend l'étape suivante :
ajouter un paquet de données d'interception dans le message de protocole H.248 ; et
la procédure pour envoyer les informations d'objet surveillé à l'entité de Fonction de Passerelle Frontière via le message de protocole H.248 étendu comprend l'étape suivante :
acheminer, par l'intermédiaire de l'entité de fonction de décision de politique de service, les informations d'objet surveillé dans le paquet de données d'interception ajouté du message de protocole H.248, et envoyer le message de protocole H.248 à l'entité de Fonction de Passerelle Frontière.

7. Procédé selon les revendications 3, 4 ou 5, dans lequel :
la procédure pour étendre le message de protocole de diamètre comprend l'étape suivante :
ajouter une paire de valeurs d'attributs dans le message de protocole de diamètre ; et
la procédure d'envoi d'informations d'objet surveillé à l'entité de fonction de décision de politique de service via le message de protocole de diamètre, comprend l'étape suivante :
acheminer les informations d'objet surveillé dans la paire valeurs d'attributs ajoutée du message de protocole de diamètre, et envoyer le message de protocole de diamètre à l'entité de fonction de décision de politique de service.

8. Procédé selon la revendication 4, dans lequel la procédure pour étendre le message de protocole d'ouverture de session comprend l'étape suivante :
ajouter un format XML basé sur le type d'application dans le message de protocole d'ouverture de session ;
et où l'étape A42 comprend les étapes suivantes :
acheminer les informations d'objet surveillé dans un corps de message du format XML basé sur le type d'application, et envoyer le message de protocole d'ouverture de session à l'entité de Fonction de Contrôle de Session d'Appel Mandataire.

9. Système pour une interception légale pour des abonnés accédant à des réseaux de prochaine génération depuis des réseaux fixes, comprenant :
une entité de Fonction de Délivrance 3 (103, 203, 207, 211, 214) conçue pour recevoir des flux de média correspondant aux abonnés surveillés et pour analyser les flux de média reçus de manière à surveiller des abonnés ;
où le système comprend en outre : une entité de délivrance d'informations d'interception (101), un élément de réseau de contrôle d'interception (208, 212), et une entité de Fonction de Passerelle Frontière (102, 202, 206, 210, 213) ; où
l'entité de délivrance d'informations d'interception (101) est une entité de Fonction d'Administration d'un Organisme d'Application de la Loi,
l'élément de réseau de contrôle d'interception (208, 212), conçu pour recevoir les données d'interception acheminant des identifiants d'abonnés surveillés envoyés depuis la Fonction d'Administration de l'Organisme d'Application de la Loi, pour obtenir un identifiant de l'entité de Fonction de Passerelle Frontière ayant transité par les flux de média correspondant aux abonnés surveillés, et pour envoyer l'identifiant obtenu de l'entité de Fonction de Passerelle Frontière à l'entité de Fonction d'Administration de l'Organisme d'Application de la Loi ;
l'entité de Fonction d'Administration de l'Organisme d'Application de la Loi est conçue pour envoyer des informations d'objet surveillé à l'entité de Fonction de Passerelle Frontière ; et
l'entité de Fonction de Passerelle Frontière (102, 202, 206, 210, 213) est conçue pour envoyer des flux de média correspondant aux abonnés surveillés à l'entité de Fonction de Délivrance 3 conformément aux informations d'objet surveillé reçues.

10. Système selon la revendication 9, dans lequel l'entité de Fonction d'Administration d'un Organisme d'Application de la Loi est connectée à l'entité de Fonction de Passerelle Frontière (102, 202, 206, 210, 213) via une interface X1_1.

11. Système selon la revendication 9, comprenant en outre :
une entité de fonction de traitement de données d'interception (205), conçue pour recevoir des données d'interception acheminant des identifiants d'abonnés surveillés à partir de l'entité de Fonction d'Administration de l'Organisme d'Application de la Loi via une interface X1_1, et pour envoyer les données d'interception acheminant des identifiants d'abonnés surveillés à l'entité de Fonction de Passerelle Frontière ;
où l'entité de Fonction d'Administration de l'Organisme d'Application de la Loi est conçue pour envoyer les données d'interception acheminant des identifiants d'abonnés surveillés à l'entité de fonction de traitement de données d'interception.

12. Système selon la revendication 9, dans lequel l'entité de délivrance d'informations d'interception (101) est un élément de réseau de contrôle d'interception existant conçu pour obtenir des informations de description des flux de média correspondant à l'abonné surveillé conformément à des données d'interception acheminant des identifiants d'abonnés surveillés envoyées depuis une Fonction d'Administration d'un Organisme d'Application de la Loi, et pour envoyer les informations de description des flux de média correspondant à l'abonné surveillé à l'entité de Fonction de Passerelle Frontière, ou pour envoyer directement les données d'interception acheminant les identifiants d'abonnés surveillés à l'entité de Fonction de Passerelle Frontière ;
où l'entité de Fonction de Passerelle Frontière (102, 202, 206, 210, 213) est conçue pour envoyer les informations de description reçues des flux de média correspondant à l'abonné surveillé ou les données d'interception acheminant des identifiants d'abonnés surveillés à l'entité de Fonction de Délivrance 3.
